# EUROPÄISCHE PATENTANMELDUNG

(11) **EP 4 683 254 A1**
(43) Veröffentlichungstag der Anmeldung: **21.01.2026**
(21) Anmeldenummer: 25182162.5
(22) Anmeldetag: 11.06.2025
(51) Int. Cl.: H04L 1/00, H04B 7/08, H04B 7/10

(54) **FUNKEMPFÄNGER, FUNKSENDER SOWIE FUNKÜBERTRAGUNGSSYSTEM**

(30) Priorität: 19.07.2024 DE 102024120680
(71) Anmelder: Diehl Metering Systems GmbH, 90451 Nürnberg (DE); DIEHL METERING SAS, 68304 Saint Louis (FR)
(72) Erfinder: Petkov, Hristo, 90411 Nürnberg (DE); Weiss, Karolin, 90459 Nürnberg (DE); Kauppert, Thomas, 90455 Nürnberg (DE); Schmidt, Christoph, 90403 Nürnberg (DE); Bach, Guy, 68640 Waldighofen (FR); Perrin, Eric, 68420 Obermorschwihr (FR); Berger, Xavier, 68260 Kingersheim (FR); Dockwiller, Bernard, 68720 Saint-Bernard (FR)
(74) Vertreter: Diehl Patentabteilung

(57) **Zusammenfassung**

Funkempfänger für ein Funkübertragungssystem (100, 110, 120, 130), vorzugsweise ein Schmalband ISM oder loT Band Funkübertragungssystem, wobei von dem Funkempfänger entweder als Funkknoten (200), vorzugsweise als Funksensor- und/oder als Funkaktorknoten, Funksignale einer Nachricht (101) im Downlink von einer Basisstation (300) empfangen werden, oder als Basisstation (300) Funksignale einer Nachricht (101) im Uplink von mindestens einem vorzugsweise einer Mehrzahl von Funkknoten (200), vorzugsweise Funksensor- und/oder Funkaktorknoten empfangen werden, wobei die Nachricht (101) entweder
(a) in dem Funkübertragungssystem (100) als ganzes Datenpaket (102) ohne Vorwärtsfehlerkorrektur versendet wird, oder
(b) in dem Funkübertragungssystem (110) als in Teildatenpakete (103_1-103_n) aufgeteiltes Datenpaket (103) versendet wird, wobei die Teildatenpakete (103_1-103_n) nacheinander versendet werden und einzeln decodierbar sind oder
(c) in dem Funkübertragungssystem (120) als in Teildatenpakete (104_1, 104_n) aufgeteiltes Datenpaket (104) versendet wird, wobei die Teildatenpakete (104_1, 104_n), vorzugsweise über unterschiedliche Frequenzkanäle, nacheinander versendet werden, oder
(d) in dem Funkübertragungssystem (130) als ein Datenpaket (106) unter Anwendung eines Chirp Spreiz Spektrums versendet wird,
wobei der Funkempfänger folgende Merkmale aufweist, eine autarke Energieversorgung in Form einer Batterie (204, 304), vorzugsweise einer Longlife Batterie, oder einer Photovoltaikanordnung (305), und eine erste Antenne (201, 301) zum Empfang von Funksignalen eines Funksenders des Funkübertragungssystems (100) und eine zweite Antenne (202, 302) zum Empfang der Funksignale des Funksenders des Funkübertragungssystems (100), wobei die erste (201, 301) und zweite Antenne (202, 302) für einen Empfang eines einheitlichen Funksignaltyps vorgesehen sind, wobei der Funkempfänger in Abhängigkeit des Empfangs der Funksignale des Funksenders seinen Empfangsbereich auf die erste Antenne (201, 301) oder zweite Antenne (202, 302) einstellt.

## Beschreibung

Die vorliegende Erfindung betrifft zum einen einen Funkempfänger für ein Funkübertragungssystem, vorzugsweise ein Schmalband- oder ISM- oder loT-Band-Funkübertragungssystem, sowie zum anderen einen entsprechenden Funksender. Die vorliegende Erfindung betrifft des Weiteren ein Funkübertragungssystem unter Verwendung eines erfindungsgemäßen Funkempfängers sowie -senders.

Bei einem Funkempfänger der gattungsgemäßen Art kann es sich entweder um einen Funkknoten, vorzugsweise einen Funksensor- und/oder Funkaktorknoten eines eine Mehrzahl von Funkknoten umfassenden Netzes handeln, welcher Funksignale als Nachricht im Downlink von einer Basisstation empfängt. Ebenso kann es sich bei dem Funkempfänger um eine Basisstation handeln, die eine Nachricht in Form von Funksignalen im Uplink von mindestens einem, vorzugsweise einer Mehrzahl von Funkknoten, vorzugsweise Funksensor- und/oder Funkaktorknoten, empfängt.

Daneben betrifft die vorliegende Erfindung einen Funksender für ein Funkübertragungssystem, vorzugsweise ein ISM- oder loT-Bank-Funkübertragungssystem. Bei dem Funksender kann es sich in entsprechender Weise entweder um einen Funkknoten oder um eine Basisstation handeln.

Derartige Funkempfänger bzw. Funksender werden von einer autarken Energiequelle in Form einer Longlife Batterie mit Energie versorgt. Handelt es sich bei dem Funkempfänger um einen SDR-Funkempfänger (Software Defined Receiver) erfolgt die Verarbeitung und Auswertung der empfangenen Funksignale auf Basis von I/Q Daten unter Anwendung von Algorithmen. Ist der Empfang des beim Funkempfänger eingegangenen Funksignals schlecht, verursacht dies eine erhöhte Rechenleistung und daraus folgend einen erhöhten Energieverbrauch. Im schlimmsten Fall kann dies dazu führen, dass der betreffende Funkempfänger aufgrund des erhöhten Energieverbrauchs seine Mindeststandzeit im Feld von z. B. zehn Jahren nicht erreicht und vorher ausgetauscht werden muss.

Ein verschlechterter Empfangsbetrieb kann sich auch aufgrund eines Fadings wegen veränderter Umgebungsbedingungen bei einem Funkempfänger einstellen.

### Aufgabe der vorliegenden Erfindung

Die Aufgabe der vorliegenden Erfindung besteht darin, einen gattungsgemäßen Funkempfänger sowie Funksender einschließlich eines entsprechenden Funkübertragungssystems zur Verfügung zu stellen, mit dem ein verbesserter Empfangsbetrieb bei geringerem Energieverbrauch ermöglicht wird.

### Lösung der Aufgabe

Die vorstehende Aufgabe wird durch die Merkmale des Anspruchs 1 sowie Anspruchs 16 gelöst. Zweckmäßige Ausgestaltungen der Erfindung werden in den abhängigen Ansprüchen beansprucht.

Durch Verwendung einer zweiten Antenne im Empfänger kann einer Verschlechterung der Datenübertragung aufgrund eines Fading bei den im Anspruch 1 unter (a) bis (d) genannten Funkübertragungssystemen wirksam verhindert werden. Der Empfänger ist hierdurch in der Lage je nach gegebener Situation seinen Empfangsbetrieb alternativ auf die erste oder zweite Antenne einzustellen, je nach dem über welche Antenne der augenblickliche Empfang besser ist. Hierdurch wird der Empfang verbessert und zudem eine Schonung der autarken Energiequelle des Empfängers erreicht, da der Empfänger aufgrund des besseren Empfangs weniger Rechenzeit und damit weniger elektrische Energie benötigt. Beide Antennen sind für einen Empfang eines einheitlichen Funksignaltyps, also für ein Funksignal gleicher Wellenform bzw. des gleichen Funkübertragungssystems bzw. Funktechnologie (z.B. MIOTY^{®} usw.) vorgesehen.

Gemäß einer Ausgestaltung der Erfindung kann zu den über die erste und zweite Antenne empfangenen Empfangssignalen, vorzugsweise fortlaufend, mindestens ein Empfangsqualitätskriterium zugewiesen werden, anhand dessen eine Auswahl eines Empfangs über die erste oder zweite Antenne erfolgt.

Gemäß einer Ausgestaltung der Erfindung kann die erste Antenne eine im Vergleich zur zweiten Antenne unterschiedliche Polarisation haben. Insbesondere, kann die erste Antenne eine horizontale Polarisation und die zweite Antenne eine vertikale Polarisation haben, oder die erste Antenne und die zweite Antenne können jeweils eine Kreuzpolarisation haben. Die die erste und zweite Antenne können auch voneinander unterschiedliche Abstrahlrichtungen haben.

Gemäß einer Ausgestaltung der Erfindung können über die von der ersten und zweiten Antenne empfangenen Empfangssignale in einem für beide Antennen samen Chip, insbesondere in einem gemeinsamen SoC-Chip, verarbeitet werden.

Gemäß einer Ausgestaltung der Erfindung können die erste Antenne oder die erste Antenne und die zweite Antenne jeweils als separates Bauteil mit dem Chip, vorzugsweise mit einem SoC-Chip, verdrahtet sein.

Gemäß einer Ausgestaltung der Erfindung kann es sich bei dem mindestens einen Empfangsqualitätskriterium um einen Wert des RSSI (Received Signal Strenght Indicator) und/oder des SNR (Signal to Noise Ratio) und/oder des CRC (Cyclic Redundancy Check) und/oder der BER (Bit Error Rate) und/oder der PER (Packet Error Rate) handeln.

Gemäß einer Ausgestaltung der Erfindung kann bei der Zuweisung des mindestens einen Empfangsqualitätskriterium der empfangenen Empfangssignale die Kohärenzzeit des Funkkanals mit einbezogen werden. Die Übertragung sollte innerhalb der Kohärenzzeit stattfinden. Vorzugsweise kann die Kohärenzzeit vom Funkempfänger anhand der Werte des RSSI oder SNR der empfangenen Signale geschätzt werden.

Gemäß einer Ausgestaltung der Erfindung können Kohärenzzeiten von mehreren Funksendern des Funkübertragungssystems vom Funkempfänger geschätzt und abgespeichert werden. Dies ist günstig, da für die Funkkanäle des Funkempfängers zu einzelnen Funksendern des Funkübertragungssystems die Kohärenzzeiten unterschiedlich sein können.

Gemäß einer Ausgestaltung der Erfindung kann der Funkempfänger anhand mehrerer aufeinanderfolgender Datenpakete bzw. Teildatenpakete eine Auswahl treffen, ob die erste oder zweite Antenne für einen weiteren Empfang verwendet wird. Vorzugsweise können die Teildatenpakete eines Core Frames (z. B. 24 Teildatenpakete) oder ein Teil der Teildatenpakete eines Core Frames (z. B. 12 Teildatenpakete) zusammengefasst werden, um genug Bits für eine Schätzung des mindestens einen Empfangsqualitätskriteriums, z. B. des RSSI zu haben. Für den Empfang des Rests des Core Frames oder eines Extension Frames kann dann die bessere Antenne genutzt werden.

Gemäß einer Ausgestaltung der Erfindung können jeweils im Empfangsfenster eingehende erste Datenpakete bzw. erste Teildatenpakete für eine Auswahl der ersten oder zweiten Antenne verwendet werden. Dies ist vorteilhaft, da der zeitliche Abstand des Eingangs der Datenpakete bzw. Teildatenpakete gering ist.

Gemäß einer Ausgestaltung der Erfindung kann mindestens ein Datenpaket oder Teildatenpaket (z. B. ein erstes) über die erste Antenne empfangen werden und mindestens ein weiteres Datenpaket oder Teildatenpaket (z. B. ein zweites) über die zweite Antenne empfangen werden, wobei die Zuordnung eines darauffolgenden Datenpakets oder Teildatenpakets zu der ersten oder zweiten Antenne in Abhängigkeit von dem mindestens einem Empfangsqualitätskriterium der empfangenen Empfangssignale erfolgt.

Gemäß einer Ausgestaltung der Erfindung können vom Funksender jeweils im Uplink über eine erste Antenne versendete Sendesignale sowie im Uplink über eine zweite Antenne versendete Sendesignale vom Funkempfänger, vorzugsweise in seiner Funktion als Basisstation, zunächst ausgewertet werden und anschließend ein Empfang über die erste Antenne oder die zweite Antenne festgelegt werden, wobei die erste und zweite Antenne vorzugsweise unterschiedliche Polarisationen aufweisen können.

Gemäß einer Ausgestaltung der Erfindung kann der Funkempfänger anhand der Funksignale der Nachricht im Uplink die Polarisationen und/oder die Funkkanaldämpfung und/oder die Signalstärke der ersten und zweiten Antenne des Funksenders schätzen bzw. ermitteln und dem Funkknoten in einer Downlink-Nachricht, z. B. im Payload der Downlink-Nachricht, das Ergebnis der Schätzung übermitteln.

Gemäß einer Ausgestaltung der Erfindung können ein Datenpaket oder Teildatenpaket als Dummy zur Überprüfung der Bedingungen der ersten oder zweiten Antenne, vorzugsweise der Antenne der beiden verwendet werden, über die gerade keine Übertragung erfolgt ist.

Gemäß einer Ausgestaltung der Erfindung können eingehende Datenpakete oder Teildatenpakete für einen Empfang über die erste oder zweite Antenne auch zufällig oder pseudozufällig ausgewählt werden.

Gemäß einer Ausgestaltung der Erfindung kann ein festes Antennenverwendungs-Muster im Funkempfänger hinterlegt sein. Hierbei kann z. B. eine der beiden Antennen stets Vorrang haben. Hierbei kann auf die Verwendung eines Kontroll- und/oder Monitoralgorithmus verzichtet werden. Vorzugsweise können mehrere feste Antennenverwendungs-Muster im Funkempfänger hinterlegt sein, so dass z. B. bei Bedarf eine Auswahl eines geeigneten Antennenverwendungs-Musters im Funkempfänger erfolgen kann.

Gemäß einer Ausgestaltung der Erfindung kann eine Auswahl der ersten oder zweiten Antenne auf Basis einer Verarbeitung von I/Q Daten erfolgen. I/Q-Daten werden im Empfangspfad des Funkempfängers erzeugt.

Gemäß einer Ausgestaltung der Erfindung kann während bzw. innerhalb eines Datenpakets oder eines Teildatenpakets ein Wechsel der Antenne erfolgen und aus dem sich daraus ergebenden mindestens einen Empfangsqualitätskriteriums eine Auswahl der Antenne durchgeführt werden. Beispielsweise kann ein Teil einer Midamble eines Datenpakets oder eines Teildatenpakets für die Schätzung, welche Antenne besser ist, herangezogen werden.

Die Erfindung betrifft des Weiteren, auch nebengeordnet, einen Funksender gemäß den Merkmalen des Anspruchs 16. Dieser Funksender ist in der Lage, im Uplink eine Nachricht entweder über eine erste oder zweite Antenne zu Versenden.

Gemäß einer Ausgestaltung der Erfindung kann die erste Antenne eine im Vergleich zur zweiten Antenne unterschiedliche Polarisation haben. Insbesondere kann die erste Antenne eine horizontale Polarisation und die zweite Antenne eine vertikale Polarisation haben. Beispielsweise kann der Funksender Datenpakete oder Teildatenpakete zeitweise über die erste und anschließend über die zweite Antenne oder abwechselnd über die erste oder zweite Antenne versenden.

Gemäß einer Ausgestaltung der Erfindung kann mindestens die erste Antenne oder die zweite Antenne eine Kreuzpolarisation haben oder es können die erste Antenne und zweite Antenne jeweils eine Kreuzpolarisation haben.

Gemäß einer Ausgestaltung der Erfindung kann der Funkempfänger im Downlink den Funksender darüber informieren, welche Antenne besser ist. Dann kann der jeweilige Funksender seine nachfolgende Kommunikation danach ausrichten.

Gemäß einer Ausgestaltung der Erfindung können die erste und zweite Antenne am Funkempfänger und/oder am Funksender jeweils in einem Abstand von mindestens λ/2 zueinander angeordnet sein, wobei λ die Wellenlänge des Funksignals ist.

Die Umschaltung des Empfangs mit Funkempfänger auf die erste oder zweite Antenne kann mittels eines Schalters erfolgen.

Gemäß einer Ausgestaltung der Erfindung ist das jeweilige Funkübertragungssystem gemäß (a) bis (d) von Anspruch 1 bzw. Anspruch 16 ein (vorzugsweise lizenzfreies) Schmalbandsystem. Insbesondere kann es sich um ein Funkübertragungssystem des 868 MHz Frequenzbereichs handeln.

### Beschreibung der Erfindung anhand von Ausführungsbeispielen

Zweckmäßige Ausgestaltungen der Erfindung werden anhand von Zeichnungsfiguren nachstehend näher erläutert. Gleichbleibende, sich wiederholende Merkmale sind der Übersichtlichkeit halber lediglich einmal mit einem Bezugszeichen versehen. Es zeigen:
- Fig. 1: eine stark vereinfachte schematische Darstellung eines einen Funkempfänger sowie einen Funksender umfassenden Funkübertragungssystems gemäß einem Beispiel der vorliegenden Erfindung;
- Fig. 2: eine stark vereinfachte schematische Darstellung eines im Funkempfänger und/oder im Funksender zu verwendenden Chips mit Antennendiversität;
- Fig. 3: ein Beispiel eines Funkübertragungssystems, bei dem eine Nachricht als ganzes Datenpaket ohne Vorwärtsfehlerkorrektur versendet wird;
- Fig. 4: ein Beispiel eines Funkübertragungssystems, bei dem eine Nachricht bzw. Datenpaket aufgeteilt in Form von mehreren, hintereinander versendeten Teildatenpaketen mit Vorwärtsfehlerkorrektur versendet wird;
- Fig. 5: ein Beispiel eines Funkübertragungssystems, bei dem eine Nachricht bzw. Datenpaket in Form von einzelnen Teildatenpaketen, die zeitlich hintereinander und bei unterschiedlicher Frequenz versendet werden, übertragen wird;
- Fig. 6: ein Beispiel eines Funkübertragungssystems, bei dem eine Nachricht bzw. Datenpaket unter Anwendung eines Chirp Spreiz Spektrums versendet wird;
- Fig. 7: ein Beispiel einer Auswahl einer von mehreren Antennen eines Funkempfängers, der über zwei Antennen verfügt, anhand mindestens eines Empfangsqualitätskriteriums des Empfangssignals;
- Fig. 8: ein Beispiel einer Auswahl der Antenne beim Empfang eines aus mehreren Teildatenpaketen bestehenden Datenpakets;
- Fig. 9: ein Beispiel eines Sendebetriebs, bei dem Teildatenpakete eines Datenpakets vom Funksender über Antennen mit unterschiedlicher Polarisation ausgesendet werden; sowie
- Fig. 10: ein Beispiel einer Schätzung eines Empfangsqualitätskriteriums anhand einer Bitfolge innerhalb eines Datenpakets.

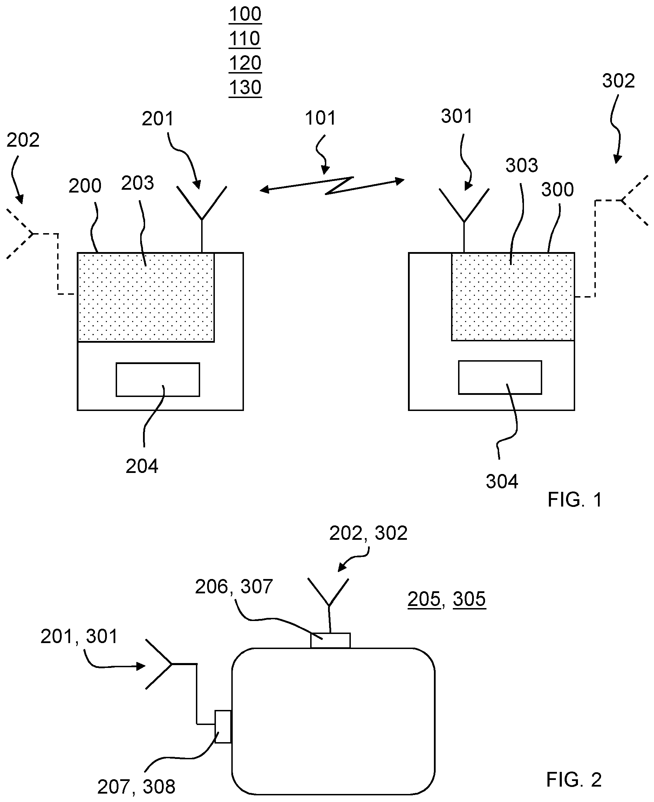

Die Bezugsziffern 100, 110, 120, 130 in Fig. 1 bezeichnen jeweils Alternativen eines für die Erfindung in Frage kommenden Funkübertragungssystems. Bei einem solchen Funkübertragungssystem kann es sich vorzugsweise um ein Funkübertragungssystem in einem ISM- oder loT-Band, besonders vorzugsweise in einem 868 MHz-Frequenzband handeln. Hierbei erfolgt jeweils eine Übertragung einer Nachricht 101 im Uplink von einem Funksender in Form eines Funkknotens 200, z. B. eines Sensorknoten oder eines Aktorknoten, zu einem Funkempfänger in Form einer Basisstation 300. Bei dem jeweiligen Funkübertragungssystem 100, 110, 120, 130 können z. B. als Teil eines Versorgungsnetzwerks für ein Versorgungsmedium, wie z. B. Wasser, Strom, Wärme oder Gas, eine Vielzahl derartiger Funksender vorgesehen sein, die Nachrichten 101 z. B. in Form von Verbrauchsdaten an die Basisstation 300 übermitteln. Von der Basisstation 300 können im Downlink Nachrichten 101 an den jeweiligen Funksender übermittelt werden.

Der Funksender bzw. Funkknoten 200 verfügt zur Ermöglichung einer Uplink-Kommunikation über ein Funkmodul 203, welches über eine erste Antenne 201 verfügt. Der Funkknoten 200 besitzt ferner eine autarke Energiequelle in Form einer Batterie 204, die vorzugsweise als sogenannte Longlife Batterie ausgebildet ist, sodass der Funkknoten 200 über einen Zeitraum von mindestens zehn Jahren sich "im Feld" befinden kann, ohne dass die Batterie ausgetauscht werden muss. Der Funkknoten 200 kann bei Bedarf über eine zweite Antenne 202 verfügen, die vorzugsweise eine im Vergleich zur ersten Antenne 201 unterschiedliche Polarisation aufweisen kann. Beispielsweise besitzt die erste Antenne 201 eine horizontale Polarisation, wohingegen die zweite Antenne 202 eine vertikale Polarisation besitzt. Auch kann die erste Antenne 201 eine Kreuzpolarisation aufweisen. Die zweite Antenne 202 des Funksenders 200 ist gestrichelt gezeichnet, womit angedeutet wird, dass sie bei einem erfindungsgemäßen mit einer ersten und zweiten Antenne 301, 302 ausgestatteten Funkempfänger vorhanden sein kann, aber nicht zwingend vorhanden sein muss.

Der Funkempfänger bzw. die Basisstation 300 verfügt zur Ermöglichung einer Downlink-Kommunikation über eine erste Antenne 301 sowie eine zweite Antenne 302, wobei die zweite Antenne 302 vorzugsweise eine zur ersten Antenne 301 unterschiedliche Polarisation aufweisen kann. Beispielsweise besitzt die erste Antenne 301 eine horizontale Polarisation, wohingegen die zweite Antenne 302 eine vertikale Polarisation besitzt. Auch kann die erste Antenne 301 eine Kreuzpolarisation aufweisen.

Die erste und zweite Antenne 201, 202 bzw. 301, 302 am Funksender bzw. am Funkempfänger sind in einem Abstand von mindestens λ /2 zueinander angeordnet, wobei λ die Wellenlänge des Funksignals ist.

Die jeweiligen beiden Antennen 201, 202 bzw. 301, 302 können auch mit unterschiedlichen Abstrahlrichtungen ausgebildet sein.

Die zweite Antenne 302 des Funkempfängers 300 ist ebenfalls gestrichelt gezeichnet, womit angedeutet wird, dass sie bei einem erfindungsgemäßen mit einer ersten und zweiten Antenne 201, 202 ausgestatteten Funksender vorhanden sein kann, aber nicht zwingend vorhanden sein muss.

Die Basisstation 300 wird vorzugsweise über eine autarke Energiequelle in Form einer Batterie 304, die vorzugsweise als sogenannte Longlife Batterie ausgebildet ist, betrieben, sodass die Basisstation 300 über einen Zeitraum von mindestens zehn Jahren "im Feld" sich befinden kann, ohne dass die Batterie ausgetauscht werden muss.

Die Basisstation 300 und vorzugsweise auch der Funkknoten 200 verfügen gemäß Fig. 2 über einen Chip 205 bzw. 305, der in dem jeweiligen Funkmoduls 303 bzw. 203 verbaut ist. Der Chip 205, 305 besitzt mehrere Antennenanschlüsse 206, 207, 307, 308, wodurch an den Chip 205, 305 eine erste sowie zweite Antenne 201, 202 bzw. 301, 302 angeschlossen werden kann. Die beiden Antennen 201, 202 bzw. 301, 302 können, wie eingangs bereits beschrieben, eine unterschiedliche Polarisation oder eine Kreuzpolarisation aufweisen.

Bei dem Chip 205, 305 handelt es sich insbesondere um einen sogenannten SoC-Chip oder "System on a Chip"-Chip. Ein derartiger Chip generiert von den eingehenden Funksignalen I/Q Daten, die weiterbearbeitet werden können, beispielsweise über Algorithmen, sodass ein "Software Defined"-Funkempfang vorgenommen werden kann.

Die jeweils erste und zweite Antenne 201, 202 des Funkknotens 200 bzw. die jeweils erste und zweite Antenne 301, 302 der Basisstation 300 sind dazu vorgesehen, Funksignale eines einheitlichen Funksignaltyps des betreffenden Funkübertragungssystems 100, 110, 120 bzw. 130 zu senden oder zu empfangen.

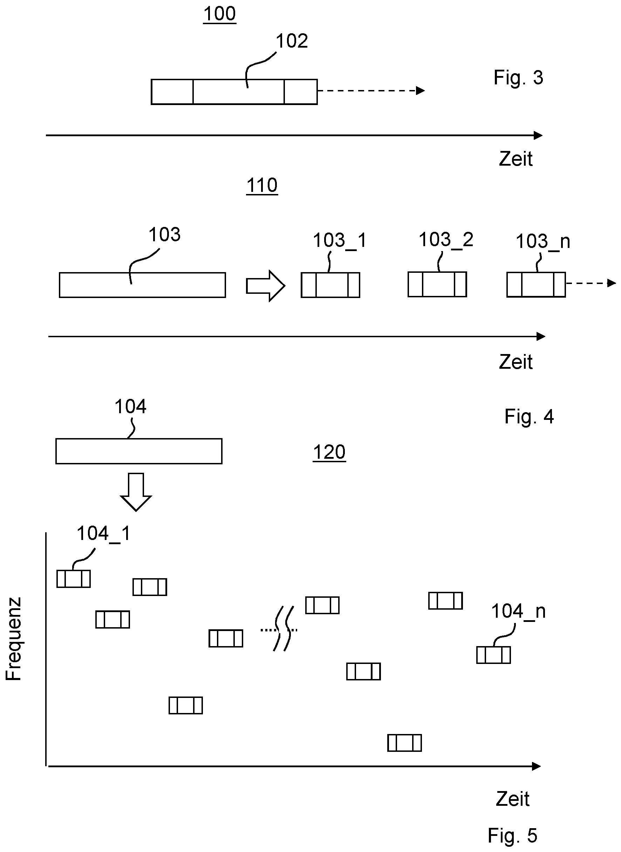

Die vorliegende Erfindung betrifft alternativ die verschiedenen Funkübertragungssysteme 100, 110, 120, 130 von Fig. 1. Bei einem in Fig. 3 dargestellten ersten Funkübertragungssystem 100 wird eine Nachricht 101 in Form eines gesamten Datenpakets 102 bzw. Telegramms gemäß Fig. 3 versendet und vom Funkempfänger empfangen, bei dem keine Vorwärtsfehlerkorrektur stattfindet. Das Datenpaket 102 umfasst eine Preamble (Header) für Steuerdaten, IP-Adressen, Paketkennung, Paketstatus, Sendefolge und Kennung, eine Midamble (Payload) für Nutzdaten sowie ein Endstück (Trailer) für Fehlererkennung, Fehlerkorrektur, Prüfsumme und/oder Flag.

Ein zweites, hier interessierendes Funkübertragungssystem 110 ist in Fig. 4 dargestellt. Hierbei wird ein Datenpaket 103 in eine Mehrzahl von (insbesondere inhaltsgleichen aber unterschiedlich codierten) Teildatenpaketen 103_1-103_n aufgeteilt. Letztere werden nacheinander versendet. Beispielsweise kann das Datenpaket 103 in drei solche Teildatenpakete aufgeteilt werden. Die Teildatenpakete 103_1-103_n sind im Empfänger einzeln decodierbar. Es findet eine Vorwärtsfehlerkorrektur statt. Die Decodierung des jeweiligen Payloads ist in jedem der Teildatenpakete 103_1-103_n anders ("Incremental Redundancy"). Der Abstand der Teildatenpakete 103_1-103_n ist konstant.

Ein drittes, vorliegend relevantes Funkübertragungssystem 120 ist in Fig. 5 gezeigt. Hierbei wird ein Datenpaket 104 bzw. Telegramm zunächst vom Funksender in eine Mehrzahl von Teildatenpakete 104_1-104_n aufgeteilt. Anschließend werden die Teildatenpakete 104_1-104_n vorzugsweise über unterschiedliche Frequenzkanäle nacheinander versendet. Der Abstand zwischen den einzelnen Teildatenpaketen 104_1-104_n ist hierbei konstant. Zum Empfang des Datenpakets 104 muss der Funkempfänger die Teildatenpakete 104_1-104_n nacheinander empfangen und daraus die der Nachricht 101 zugrundeliegende Information extrahieren. Die einzelnen Teildatenpakete 104_1-104_n können insbesondere einen sogenannten Core Frame einer Nachricht 101 bilden. Beispielsweise kann ein Core Frame 24 Teildatenpakete 104_1-104_n haben. An den Core Frame einer Nachricht 101 schließt sich ein Extension Frame der Nachricht 101 an. Vorzugsweise handelt es sich hierbei um ein Funkübertragungssystem bzw. um eine Funktechnologie gemäß der ETSI TS 103 357 V1.1.1 (2018-06) oder einer nachfolgenden Fassung zu dieser Norm.

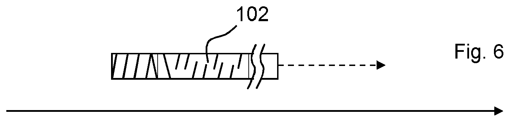

Ein viertes, vorliegend ebenfalls relevantes Funkübertragungssystem 130 ist in Fig. 6 gezeigt. Fig. 6 zeigt ein Datenpaket 102 unter Anwendung einer CSS ("Chirp Spread Spectrum") Modulation. Hierbei wird nicht auf einer festen, sondern sich ändernden Trägerfrequenz übertragen. Das Signal beinhaltet zeitliche Frequenzänderungen. Beispielsweise kann die Trägerfrequenz des Signals mit der Zeit zunehmen oder abnehmen.

Ein vorerwähntes Teildatenpaket umfasst ebenfalls eine Preamble (Header) für Steuerdaten, IP-Adressen, Paketkennung, Paketstatus, Sendefolge und Kennung, eine Midamble (Payload) für Nutzdaten sowie ein Endstück (Trailer) für Fehlererkennung, Fehlerkorrektur, Prüfsumme und/oder Flag.

Für die vorerwähnten Funkübertragungssysteme 100, 110, 120 sowie 130 ist die Anwendung der vorliegenden Erfindung von besonderem Interesse aufgrund der Möglichkeit der Verbesserung des Signalempfangs und der daraus resultierenden Reduzierung des Energieverbrauchs.

Die Erfindung erlaubt es, zu den vom Funkempfänger über die erste Antenne sowie zweite Antenne empfangenen Empfangssignalen, vorzugsweise fortlaufend, mindestens ein Empfangsqualitätskriterium zuzuweisen, anhand dessen eine Auswahl eines Empfangs über die erste Antenne oder zweite Antenne erfolgen kann. Die erste Antenne kann eine im Vergleich zur zweiten Antenne unterschiedliche Polarisation aufweisen. Beispielsweise kann die erste Antenne eine horizontale Polarisation und die zweite Antenne eine vertikale Polarisation aufweisen. Die erste Antenne und die zweite Antenne können auch jeweils eine Kreuzpolarisation haben. Ferner kann die erste Antenne und die zweite Antenne voneinander unterschiedliche Abstrahlrichtungen haben. Dies gilt zum einen bezüglich der ersten und zweiten Antenne des Funkempfängers bei einem Funksender, welcher lediglich eine erste Antenne aufweist. Gleichermaßen gilt vorstehendes auch für eine Funkübertragung, bei der auch der Funksender eine erste Antenne sowie zweite Antenne aufweist.

Gemäß einer Ausgestaltung der vorliegenden Erfindung kann auch nur der Funksender 200, vgl. Fig. 1, eine erste Antenne 201 sowie zweite Antenne 202 aufweisen, wohingegen der Funkempfänger 300 lediglich eine erste Antenne 301 aufweist. Werden beispielsweise Funksignale vom Funksender 200 über die erste Antenne 201 und über die zweite Antenne 202 mit unterschiedlichen Polarisationen verschickt, kann dies im Funkempfänger 300 zu einem verbesserten Empfang führen.

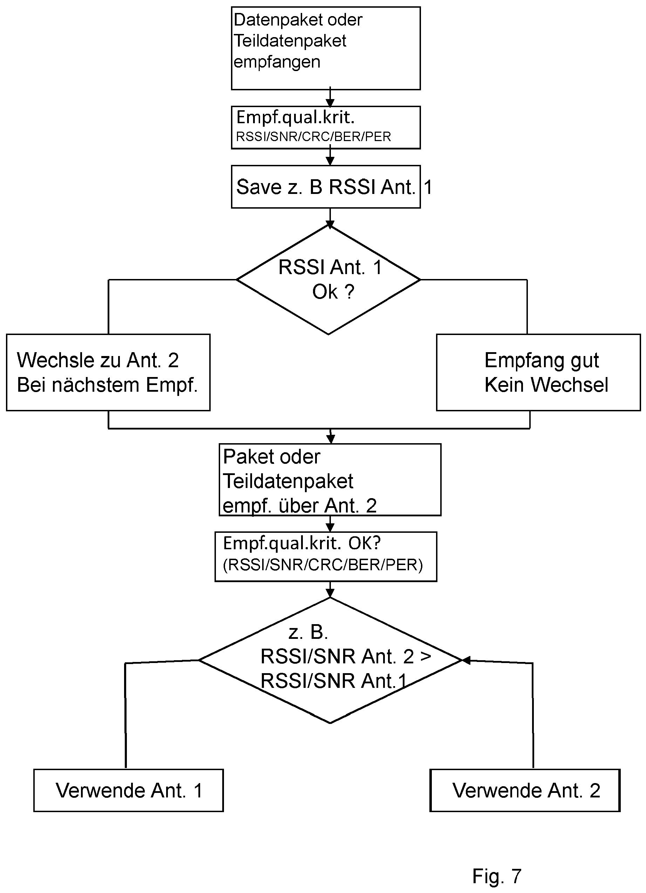

Fig. 7 zeigt ein Beispiel einer Steuerung zur Gewährleistung eines besseren Empfangs und zur Vermeidung eines sogenannten Fadings bei einem Funkempfänger 300, welcher mit einer ersten sowie zweiten Antenne 301 bzw. 302 ausgestattet ist. Der Funkempfänger 300 empfängt zunächst ein Datenpaket oder Teildatenpaket der beschriebenen Art und prüft zu dem Datenpaket einen Wert des mindestens einen Empfangsqualitätskriteriums, wie z. B. des RSSI, des SNR des CRC und/oder des BER. Hierbei prüft er z. B., ob die Signalausbeute des Empfangs über die erste Antenne ausreichend ist. Diese Prüfung erfolgt anhand eines Empfangsqualitätskriteriums, z. B. dem RSSI. Ist das RSSI ausreichend hoch, wird der Empfang als gut qualifiziert und es erfolgt kein Wechsel auf die zweite Antenne. Ist das RSSI demgegenüber nicht ausreichend, wechselt der Funkempfänger beim nächsten Empfang auf die zweite Antenne. Anschließend wird über die zweite Antenne ein Datenpaket oder Teildatenpaket der beschriebenen Art empfangen und erneut eine Überprüfung des betreffenden Empfangsqualitätskriteriums RSSI, SNR, CRC, BER und/oder PER durchgeführt. Je nachdem, welches von dem mindestens einen Empfangsqualitätskriterium hinsichtlich der ersten bzw. zweiten Antenne überwiegt, wird entweder der Empfang über die erste Antenne beibehalten oder auf die zweite Antenne gewechselt. Die Umschaltung des Empfangs mit Funkempfänger auf die erste oder zweite Antenne kann mittels eines Schalters erfolgen.

Hierbei ist es von Vorteil, dass die Kohärenzzeit des Funkkanals eingehalten wird. Während der Kohärenzzeit des Funkkanals bleibt der Funkkanal konstant. Von den empfangenen RSSI-Werten oder SNR-Werten kann die Kohärenzzeit geschätzt werden. In dem Funkempfänger kann die Kohärenzzeit für individuelle Funkknoten in einem Speicher hinterlegt werden. Auf diese Weise kennt der Funkempfänger die Kohärenzzeit des betreffenden Funkkanals zu dem jeweiligen Funkknoten. Falls der zuletzt, d. h. beim letzten Funkempfang, generierte Wert innerhalb der Kohärenzzeit liegt und der Funkkanal gut ist, kann dieselbe Antenne für den Empfang weiterverwendet werden.

Nach dem Empfang eines Pakets oder Teildatenpakets mit einem ausreichenden Wert bezüglich des mindestens einen Empfangsqualitätskriteriums kann der Funkempfänger die Empfangswahrscheinlichkeit abschätzen. Zu diesem Zweck kann die BER und/oder PER mit einem idealen dekodierten Paket bzw. Teilpaket verglichen werden. Über einen gewissen Bereich kann die BER und/oder PER korrigiert bzw. angepasst werden. Liegt die aktuelle BER oder PER jedoch über einem vorgegebenen Grenzwert, kann auf die andere Antenne gewechselt werden.

Im Falle des zweiten und dritten Funkübertragungssystems gemäß Fig. 4 bzw. Fig. 5 gibt es weitere Optionen bezüglich eines Vergleichs der Antennen. Beispielsweise kann für ein erstes Teildatenpaket, z. B. 103_1 der mehreren redundanten Teildatenpakete gemäß dem zweiten Funkübertragungssystem 110 gemäß Fig. 4 die erste Antenne und für das nächste redundante Teildatenpaket 103_2 die zweite Antenne verwendet werden. Abhängig von dem Wert des jeweiligen Empfangsqualitätskriteriums, z. B. RSSI, kann z. B. für das dritte redundante Teildatenpaket 103_3 die jeweils bessere Antenne verwendet werden. Vorteilhaft ist es, wenn jeweils die ersten Teildatenpakete für die Überprüfung, welche der beiden Antennen für die weiteren Teildatenpakete verwendet werden sollen, herangezogen werden. Dies gilt auch für eine Übertragung in dem dritten Funkübertragungssystem 120 nach Fig. 5.

Der Funkkanal ist reziprok. Es ist daher möglich, den Funkkanal im Rahmen einer Uplink-Übertragung vorher zu messen. Der Funkempfänger 300 kann die Polarisationen der Antennen des Funksenders 200 schätzen. Hierbei kann der Funksender 200 für eine Uplink-Übertragung einmal seine erste Antenne 201 und einmal seine zweite Antenne 202 verwenden. Beispielsweise kann der Funksender 200 ein Datenpaket oder ein Teildatenpaket über eine erste Antenne mit einer vertikalen Polarisation versenden und im Anschluss daran ein zweites Datenpaket oder Teildatenpaket über die zweite Antenne, welche eine horizontale Polarisation hat, versenden. Der Funkempfänger 300 kann dann schätzen, welche Sendeantenne besser ist, die mit der vertikalen Polarisation oder die mit der horizontalen Polarisation. Weiterhin kann der Funkempfänger 300 diese Information im Downlink zurück an den betreffenden Funksender 200 übermitteln. Die Übermittlung dieser Information kann im Payload eines Downlink-Datenpakets oder Teildatenpakets erfolgen.

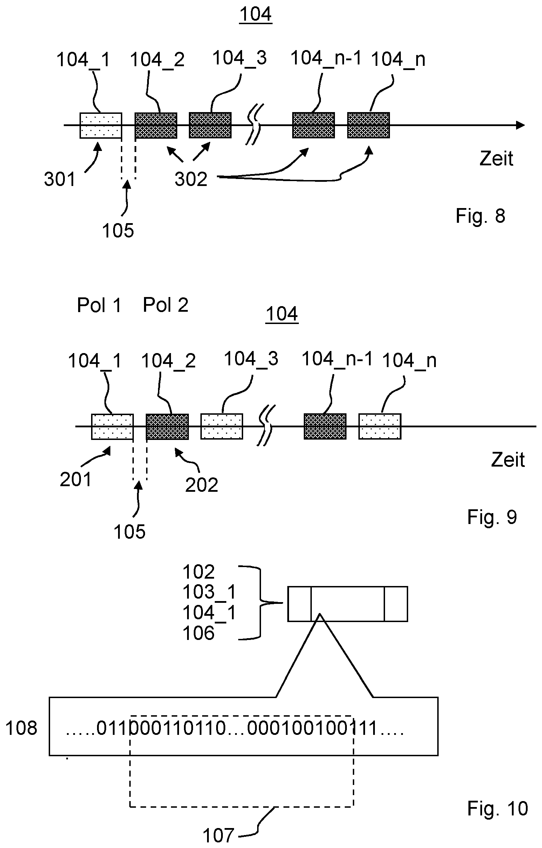

Eine Auswahl der Antenne kann durch Empfang der Datenpakete 102 oder der Teildatenpakete 103_1-103_n bzw. 104_1-104_n über die erste oder zweite Antenne 31, 302 des Funkempfängers erfolgen. Hierbei ist im Funkempfänger der zeitliche Abstand 105 (vgl. Fig. 8) der einzelnen der Datenpakete 102 oder Teildatenpakete 103_1-103_n bzw. 104_1-104_n bekannt. Dem Funkempfänger ist somit bekannt, welche Datenpakete oder Teildatenpakete zueinander gehören.

Unterschiedliche Datenpakete oder Teildatenpakete können vom Funkempfänger 300 über die erste oder zweite Antenne 301, 302 empfangen und unter Berücksichtigung des mindestens einen Empfangsqualitätskriteriums dahingehend ausgewertet werden, welche der beiden Antennen für einen besseren Empfang geeignet ist.

Beispielsweise wird unter exemplarischem Verweis auf das Funkübertragungssystem 120 von Fig. 5 gemäß Fig. 8 ein erstes Teildatenpaket 104_1 über die erste Antenne 301 empfangen und nach dem Abstand 105 ein zweiten Teildatenpaket 104_2 über die zweite Antenne 302 empfangen. Bei dem Beispiel in Fig. 8 ist der Empfang des zweiten Teildatenpakets 104_2 über die zweite Antenne 302 besser. In Anbetracht dessen kann über die zweite Antenne 302 der Empfang der weiteren Teildatenpakete der Nachricht 101 oder des Datenpakets 104 erfolgen. Entsprechend können auch eine Mehrzahl von Teildatenpaketen für die Bestimmung, ob der Empfang über die erste Antenne 301 oder zweite Antenne 302 erfolgen soll, zusammengefasst werden. Beispielsweise können 24 Teildatenpakete des Core Frames für eine Bestimmung zusammengefasst werden. Zumindest aber sollten 12 Teildatenpakete für eine Bestimmung der Antennenauswahl zusammengefasst werden, da dann noch weitere 12 Teildatenpakete für den Empfang des Datenpakets 104 über die geeignetere Antenne zur Verfügung stehen. Bei mindestens 12 Teildatenpaketen ist auch eine genügende Anzahl von Bits vorhanden, um anhand der Synchronisationssequenzbits das RSSI zu schätzen.

Fig. 9 zeigt ebenfalls unter exemplarischem Verweis auf das Funkübertragungssystem 120 von Fig. 5 die Aussendung eines Datenpakets 104 durch den Funksender 200 in Form einzelner nacheinander versendeter Teildatenpakete 104_1-104_n in einem gleichen zeitlichen Abstand 105 untereinander. Die einzelnen Teildatenpakete 104_1-104_n werden (wie durch die unterschiedliche Kennzeichnung in Fig. 9 hervorgehoben) beispielsweise von dem Funksender 200 jeweils abwechselnd über die jeweils erste bzw. zweite Antenne 201 bzw. 202 versendet. Hierbei kann die erste Antenne 201 eine erste Polarisation und zweite Antenne 202 eine hierzu unterschiedliche zweite Polarisation aufweisen. Eine derartig übertragene Nachricht kann vom Funkempfänger 300 in Bezug auf die Empfangsqualität der einzelnen Teildatenpakete 104_1-104_n ausgewertet werden. Hierbei können vom Funkempfänger 300 diejenigen Teildatenpakete für den Empfang verwendet werden, welche besser empfangen werden können. Darüber hinaus kann der Funkempfänger 300 im Downlink an den Funksender 200 eine entsprechende Nachricht übermitteln, welche der von den beiden Antennen 201, 202 versendeten Teildatenpakete 104_1-104_n besser empfangbar sind. Der Funksender 200 kann dann seinen Sendebetrieb über die erste oder zweite Antenne 201, 202 vornehmen, je nachdem, welche bei Empfänger ankommenden Funksignale besser sind.

Fig. 10 zeigt eine weitere Ausgestaltung der vorliegenden Erfindung, bei der eine Auswertung des mindestens einen Empfangsqualitätskriteriums über eine Sequenz 107 einer Bitfolge 108 eines Datenpakets oder Teildatenpakets 102, 103_1, 104_1 bzw. 106 erfolgt. Eine solche Sequenz 107 kann sich beispielsweise in einer Midamble eines Datenpakets oder Teildatenpakets befinden.

### BEZUGSZEICHENLISTE

- 100: Funkübertragungssystem
- 101: Nachricht
- 102: Datenpaket (Telegramm)
- 103: Datenpaket (Telegramm)
- 103_1: Teildatenpaket
- 103_1: Teildatenpaket
- 104: Datenpaket (Telegramm)
- 104_1: Teildatenpaket
- 104_n: Teildatenpaket
- 105: Abstand zweier Teildatenpakete zueinander
- 106: Datenpaket (Telegramm)
- 107: Sequenz
- 108: Bitfolge
- 110: Funkübertragungssystem
- 120: Funkübertragungssystem
- 130: Funkübertragungssystem

- 200: Funkknoten
- 201: erste Antenne des Funkknotens
- 202: zweite Antenne des Funkknotens
- 203: Funkmodul
- 204: Batterie
- 205: Chip
- 206: Antennenanschluss
- 207: Antennenanschluss

- 300: Basisstation
- 301: erste Antenne der Basisstation
- 302: zweite Antenne der Basisstation
- 303: Funkmodul
- 304: Batterie
- 305: Chip
- 306: Photovoltaikanordnung
- 307: Antennenanschluss
- 308: Antennenanschluss

## Patentansprüche

1. Funkempfänger für ein Funkübertragungssystem (100, 110, 120, 130), vorzugsweise ein Schmalband oder ISM oder loT Band Funkübertragungssystem, wobei von dem Funkempfänger entweder
als Funkknoten (200), vorzugsweise als Funksensor- und/oder als Funkaktorknoten, Funksignale einer Nachricht (101) im Downlink von einer Basisstation (300) empfangen werden, oder
als Basisstation (300) Funksignale einer Nachricht (101) im Uplink von mindestens einem vorzugsweise einer Mehrzahl von Funkknoten (200), vorzugsweise Funksensor- und/oder Funkaktorknoten empfangen werden, wobei die Nachricht (101) entweder
(a) in dem Funkübertragungssystem (100) als ganzes Datenpaket (102) ohne Vorwärtsfehlerkorrektur versendet wird, oder
(b) in dem Funkübertragungssystem (110) als in Teildatenpakete (103_1-103_n) aufgeteiltes Datenpaket (103) mit Vorwärtsfehlerkorrektur versendet wird, wobei die Teildatenpakete (103_1-103_n) nacheinander versendet werden und einzeln decodierbar sind oder
(c) in dem Funkübertragungssystem (120) als in Teildatenpakete (104_1, 104_n) aufgeteiltes Datenpaket (104) versendet wird, wobei die Teildatenpakete (104_1, 104_n), vorzugsweise über unterschiedliche Frequenzkanäle, nacheinander versendet werden, oder
(d) in dem Funkübertragungssystem (130) als ein Datenpaket (106) unter Anwendung eines Chirp Spreiz Spektrums versendet wird,
wobei der Funkempfänger folgende Merkmale aufweist,
eine autarke Energieversorgung in Form einer Batterie (204, 304), vorzugsweise einer Longlife Batterie, oder einer Photovoltaikanordnung (305), und
eine erste Antenne (201, 301) zum Empfang von Funksignalen eines Funksenders des Funkübertragungssystems (100) und eine zweite Antenne (202, 302) zum Empfang der Funksignale des Funksenders des Funkübertragungssystems (100), wobei die erste (201, 301) und zweite Antenne (202, 302) für einen Empfang eines einheitlichen Funksignaltyps vorgesehen sind,
wobei der Funkempfänger in Abhängigkeit des Empfangs der Funksignale des Funksenders seinen Empfangsbereich auf die erste Antenne (201, 301) oder zweite Antenne (202, 302) einstellt.

2. Funkempfänger nach Anspruch 1, **dadurch gekennzeichnet, dass** zu den über die erste (201, 301) und zweite Antenne (202, 302) empfangenen Empfangssignalen, vorzugsweise fortlaufend, mindestens ein Empfangsqualitätskriterium zugewiesen wird, anhand dessen eine Auswahl eines Empfangs über die erste (201, 301) oder zweite Antenne (202, 302) erfolgt.

3. Funkempfänger nach mindestens einem der vorhergehenden Ansprüche, **dadurch gekennzeichnet, dass** die erste Antenne (201, 301) eine im Vergleich zur zweiten Antenne (202, 302) unterschiedliche Polarisation hat, insbesondere, dass die erste Antenne (201, 301) eine horizontale Polarisation und die zweite Antenne (202, 302) eine vertikale Polarisation hat, oder die erste Antenne (201, 301) und die zweite Antenne (202, 302) jeweils eine Kreuzpolarisation haben.

4. Funkempfänger nach mindestens einem der vorhergehenden Ansprüche, **dadurch gekennzeichnet, dass** die erste Antenne (201, 301) und zweite Antenne (202, 302) voneinander unterschiedliche Abstrahlrichtungen haben.

5. Funkempfänger nach mindestens einem der vorhergehenden Ansprüche, **dadurch gekennzeichnet, dass** über die von der ersten (201, 301) und zweiten Antenne (202, 302) empfangenen Empfangssignale in einem für beide Antennen (201, 301 bzw. 202, 302) gemeinsamen Chip (205, 305), insbesondere in einem gemeinsamen SoC-Chip, verarbeitet werden.

6. Funkempfänger nach mindestens einem der vorhergehenden Ansprüche 2 bis 5, **dadurch gekennzeichnet, dass** es sich bei dem mindestens einen Empfangsqualitätskriterium um
das RSSI und/oder
das SNR und/oder
das CRC und/oder
die BER und/oder
die PER
handelt.

7. Funkempfänger nach mindestens einem der vorhergehenden Ansprüche 2 bis 6, **dadurch gekennzeichnet, dass** bei der Zuweisung des mindestens einen Empfangsqualitätskriterium der empfangenen Empfangssignale die Kohärenzzeit des Funkkanals mit einbezogen wird.

8. Funkempfänger nach mindestens einem der vorhergehenden Ansprüche, **dadurch gekennzeichnet, dass** der Funkempfänger anhand mehrerer aufeinanderfolgender Datenpakete (102, 106) bzw. Teildatenpakete (103_1, 103_n; 104_1, 104_n) eine Auswahl trifft, welche der ersten (301) oder zweiten Antenne (302) verwendet wird.

9. Funkempfänger nach mindestens einem der vorhergehenden Ansprüche 2 bis 8, **dadurch gekennzeichnet, dass**
mindestens ein Datenpaket (102, 106) oder Teildatenpaket (103_1, 103_n; 104_1, 104_n) über die erste Antenne (301) empfangen wird,
mindestens ein weiteres Datenpaket (102, 106) oder Teildatenpaket (103_1, 103_n; 104_1, 104_n) über die zweite Antenne (302) empfangen wird,
wobei die Zuordnung mindestens eines darauffolgenden Datenpakets (102, 106) oder Teildatenpakets (103_1, 103_n; 104_1, 104_n) zu der ersten (301) oder zweiten Antenne (302) in Abhängigkeit von dem mindestens einem Empfangsqualitätskriterium der empfangenen Empfangssignale erfolgt.

10. Funkempfänger nach mindestens einem der vorhergehenden Ansprüche, **dadurch gekennzeichnet, dass**
vom Funksender im Uplink über eine erste Antenne (201) sowie im Uplink über eine zweite Antenne (202) versendete Sendesignale vom Funkempfänger zunächst ausgewertet werden und anschließend für den Uplink eine Versendung über die erste Antenne (301) oder die zweite Antenne (302) festgelegt wird, wobei die erste und zweite Antenne (201, 202) vorzugsweise unterschiedliche Polarisationen aufweisen.

11. Funkempfänger nach Anspruch 10, **dadurch gekennzeichnet, dass** der Funkempfänger anhand der Funksignale der Nachricht (101) im Uplink die Polarisationsart und/oder die Funkkanaldämpfung und/oder die Signalstärke der ersten (201) und zweiten Antenne (202) des Funksenders schätzt bzw. ermittelt und dem Funkknoten (200) in einer Downlink-Nachricht das Ergebnis der Schätzung übermittelt.

12. Funkempfänger nach mindestens einem der vorhergehenden Ansprüche, **dadurch gekennzeichnet, dass** eingehende Datenpakete (102, 106) oder Teildatenpakete (103_1, 103_n; 104_1, 104_n) für einen Empfang über die erste oder zweite Antenne zufällig oder pseudozufällig ausgewählt werden.

13. Funkempfänger nach mindestens einem der vorhergehenden Ansprüche, **dadurch gekennzeichnet, dass** mindestens ein festes Antennenverwendung-Muster im Funkempfänger hinterlegt ist.

14. Funkempfänger nach mindestens einem der vorhergehenden Ansprüche, **dadurch gekennzeichnet, dass** eine Auswahl der ersten oder zweiten Antenne (301, 302) auf Basis einer Verarbeitung von I/Q Daten erfolgt.

15. Funkempfänger nach Anspruch 14, **dadurch gekennzeichnet, dass** eine Schätzung auf Basis des mindestens einen Empfangsqualitätskriteriums anhand einer Sequenz einer Mehrzahl von Bits eines Teils eines Datenpakets oder Teildatenpakets erfolgt.

16. Funksender für ein Funkübertragungssystem (100, 110, 120, 130), vorzugsweise ein ISM oder loT Band Funkübertragungssystem, insbesondere zum Versenden einer Nachricht (101) zum Empfang durch einen Funkempfänger gemäß einem der vorhergehenden Ansprüche, wobei von dem Funksender entweder
als Funkknoten (200), vorzugsweise als Funksensor- und/oder als Funkaktorknoten, Funksignale einer Nachricht (101) im Uplink an eine Basisstation (300) sendet, oder
als Basisstation (300) Funksignale einer Nachricht (101) im Downlink an mindestens einen vorzugsweise an eine Mehrzahl von Funkknoten (200), vorzugsweise Funksensor- und/oder als Funkaktorknoten, sendet, wobei die Nachricht (101)
(a) in dem Funkübertragungssystem (100) als ganzes Datenpaket (102) ohne Vorwärtsfehlerkorrektur versendet wird, oder
(b) in dem Funkübertragungssystem (110) als in Teildatenpakete (103_1-103_n) aufgeteiltes Datenpaket (103) mit Vorwärtsfehlerkorrektur versendet wird, wobei die Teildatenpakete (103_1-103_n) nacheinander versendet werden und einzeln decodierbar sind, oder
(c) in dem Funkübertragungssystem (120) als in Teildatenpakete (104_1, 104_n) aufgeteiltes Datenpaket (104) versendet wird, wobei die Teildatenpakete (104_1, 104_n), vorzugsweise über unterschiedliche Frequenzkanäle, nacheinander versendet werden, oder
(d) in dem Funkübertragungssystem (130) als ein Datenpaket (106) unter Anwendung eines Chirp Spreiz Spektrums versendet wird,
wobei der Funksender folgende Merkmale aufweist,
eine autarke Energieversorgung in Form einer Batterie (204, 304), vorzugsweise einer Longlife Batterie, oder einer Photovoltaikanordnung (305), und
eine erste Antenne (201, 301) zum Senden von Funksignalen an einen Funkempfänger des Funkübertragungssystems (100) und eine zweite Antenne (202, 302) zum Senden von Funksignalen an den Funkempfänger des Funkübertragungssystems (100), wobei die erste (201, 301) und zweite Antenne (202, 302) das Senden eines einheitlichen Funksignaltyps vorgesehen sind.

17. Funksender nach Anspruch 16, **dadurch gekennzeichnet, dass** die erste Antenne (201, 301) eine im Vergleich zur zweiten Antenne (202, 302) unterschiedliche Polarisation hat, insbesondere, dass die erste Antenne (201, 301) eine horizontale Polarisation und die zweite Antenne (202, 302) eine vertikale Polarisation hat oder
mindestens die erste Antenne (201, 301) oder die zweite Antenne (202, 302) eine Kreuzpolarisation hat, oder
die erste Antenne (201, 301) und zweite Antenne (202, 302) jeweils eine Kreuzpolarisation haben.

18. Funkübertragungssystem (100, 110, 120, 130), vorzugsweise ein Schmalband oder ISM oder loT Band Funkübertragungssystem, **dadurch gekennzeichnet, dass** es einen Funkempfänger bzw. eine Basisstation (300) gemäß mindestens einem der Ansprüche 1 bis 15 und/oder einen Funksender bzw. Funkknoten (200) gemäß Anspruch 16 oder 17 umfasst.

19. Funkübertragungssystem (100, 110, 120, 130) nach Anspruch 18, **dadurch gekennzeichnet, dass** Funkempfänger sowie Funksender jeweils eine erste Antenne (301, 201) sowie eine zweite Antenne (302, 202) aufweist.
